**Europäisches Patentamt**

**European Patent Office**

**Office européen des brevets**

(19)

(11) Veröffentlichungsnummer: **0 232 513**
**A2**

(12) # EUROPÄISCHE PATENTANMELDUNG

(21) Anmeldenummer: **86117227.8**

(22) Anmeldetag: **10.12.86**

(51) Int. Cl.⁴: **G 01 N 27/00**

(30) Priorität: **11.12.85 DE 3543753**

(43) Veröffentlichungstag der Anmeldung: **19.08.87**
**Patentblatt 87/34**

(84) Benannte Vertragsstaaten: **DE FR GB NL**

(71) Anmelder: **Drägerwerk Aktiengesellschaft, Moislinger Allee 53-55, D-2400 Lübeck 1 (DE)**
Anmelder: **Max-Planck-Gesellschaft zur Förderung der Wissenschaften e.V., Bunsenstrasse 10, D-3400 Göttingen (DE)**

(72) Erfinder: **Schlechtriemen, Gerhard-Ludwig, Dr.rer.nat., Morkerke Strasse 12, D-2400 Lübeck 1 (DE)**
Erfinder: **Hötzel, Gerhard, Dipl.-Chem., Taubenheimstrasse 108, D-7000 Stuttgart 50 (DE)**
Erfinder: **Weppner, Werner, Dr. Dipl.-Phys., Weinbergweg 20A, D-7000 Stuttgart 80 (DE)**

(54) **Verfahren zur Erzeugung einer sensitiven Phase in einer einen festen Ionenleiter enthaltenden Festkörperkette sowie Ionenleiter hierzu.**

(57) Ein Verfahren zur Erzeugung einer gassensitiven Phase in einer einen festen Ionenleiter enthaltenden Festkörperkette soll derart ausgeführt werden, daß eine Meßelektrode mit hoher Ansprechgeschwindigkeit entsteht. Hierzu ist erfindungsgemäß vorgesehen, daß an den Bezugsflächen des festen Ionenleiters zwischen der auszubildenden Meßelektrode und der Referenzelektrode eine Gleichspannung geeigneter Polarität angelegt wird, welche einen Strom erzeugt, der solche bewegliche Ionen aus dem Ionenleiter an dessen Oberfläche und an die poröse Meßelektrode im Bereich der zu bildenden gassensitiven Phase heranführt, die mit der gleichzeitig gasförmig vorliegenden, während der Messung nachzuweisenden Gaskomponente auf der Meßelektrode die gassensitive Phase bilden.

Anmelder: Drägerwerk AG, 2400 Lübeck, DE
Max-Planck-Gesellschaft zur Förderung der
Wissenschaften e.V., 3400 Göttingen, DE

Verfahren zur Erzeugung einer sensitiven Phase
in einer einen festen Ionenleiter enthaltenden
Festkörperkette sowie Ionenleiter hierzu

Die Erfindung betrifft ein Verfahren zur Erzeugung einer sensitiven Phase in einer zur Messung einer Komponente eines Mediums, insbesondere eines Gasgemisches, bestimmten, einen festen Ionenleiter enthaltenden Festkörperkette, wobei in Verbindung mit der an den Ionenleiter anschließenden Referenzphase und der entsprechend der nachzuweisenden Gaskomponente ausgewählten gassensitiven Phase Ableitelektroden, nämlich eine Referenzelektrode und eine poröse Meßelektrode, vorgesehen sind.

0232513

In der DE-OS 29 26 172 ist ein Verfahren zur Messung der Aktivität einer Komponente eines Mediums mit Hilfe eines festen Ionenleiters angegeben. Dieser enthält mehrere Komponenten, von denen eine Komponente mit der zu messenden Komponente übereinstimmt. Der Ionenleiter wird einerseits mit dem zu messenden Medium und Nachbarphasen des Phasensystems und andererseits mit einer Referenzelektrode ins Gleichgewicht gebracht. Die Spannung zwischen dieser Referenzelektrode und einer Meßelektrode, welche mit der für die nachzuweisende Komponente des Mediums sensitiven Phase in Verbindung steht, stellt ein Maß für die Aktivität der nachzuweisenden Komponente dar.

Ein fester Ionenleiter, der u.a. als Lambda-Meßsonde in der Abgasströmung von Verbrennungskraftmaschinen verwendet werden kann, ist in der Literaturstelle "Solid State Ionics" 9 & 10, 1983, 783-792 von G. Velasco beschrieben. Die Lambda-Sonde enthält einen Festelektrolyten, der auf einem Substratträger aufgebracht ist und mit einer Referenzelektrode aus Palladium/Palladiumoxid und mit einer gassensitiven Meßelektrode aus einer porösen Platinschicht sowie mit dem Elektrolyten einer Ionenpumpe in Verbindung steht.

Das Aufbauschema einer für die Anwendung als Gassensor geeigneten Festkörperkette läßt sich in folgender Phasenkonfiguration darstellen:

(Referenzelektr.) Ableitelektr.I/Ref.Phase/fest.Ionen-leit./gass.Phase/(Meßelektr.)/Ableitelektr. II/ nachzuweisendes Medium ‹ Gas ›.

Hierbei tritt zwischen den Ableitelektroden I und II, die in Verbindung mit der Referenzphase bzw. der gassensitiven Phase die Referenzelektrode bzw. Meßelektrode bilden, eine Potentialdifferenz auf, deren Wert bei konstanter Temperatur längs der Festkörperkette und bei gegebener Bezugsaktivität an der Phasengrenze Referenzphase/fester Ionenleiter nur von der Aktivität bzw. dem Partialdruck der nachzuweisenden Komponente bestimmt wird. Der feste Ionenleiter, der auch als Festelektrolyt bezeichnet werden kann, trennt die Meßelektrode und die Referenzelektrode derart voneinander, daß das nachzuweisende Medium keine Möglichkeit des Zutritts von der meßseitigen zur referenzseitigen Phasengrenze durch die Zelle hindurch besitzt. Zum anderen stellt er eine praktisch rein ionisch leitende Verbindung zwischen Referenzelektrode und Meßelektrode dar, und dies ergibt einen analogen Aufbau wie bei bekannten galvanischen Zellen der Elektrochemie, welche flüssige Phasen als Ionenleiter mit den darin befindlichen Elektroden aufweisen.

Die Erfindung geht von der Aufgabenstellung aus, eine
als Sensor bevorzugt für gasförmige Medien verwendbare
Festkörperkette der eingangs angegebenen Art so auszubilden, daß die gassensitive Phase im Bereich der porösen meßseitigen Ableitelektrode eine hohe Ansprechgeschwindigkeit aufweist.

Die Lösung dieser Aufgabenstellung erfolgt dadurch, daß
an den Bezugsflächen des festen Ionenleiters zwischen
der auszubildenden Meßelektrode und der Referenzelektrode eine Gleichspannung geeigneter Polarität angelegt
wird, welche einen Strom erzeugt, der solche bewegliche
Ionen aus dem Ionenleiter an dessen Oberfläche und an
die poröse Meßelektrode im Bereich der zu bildenden
gassensitiven Phase heranführt, die mit der gleichzeitig
gasförmig vorliegenden, während der Messung nachzuweisenden Gaskomponente auf der Meßelektrode die gassensitive Phase bilden. Wird beispielsweise eine Meßelektrode
aus porösem Platin verwendet, so entsteht die gassensitive Phase in Form von Randzonen, welche auf der Oberfläche des Ionenleiters die Platininseln umgeben. Das
Verfahren ermöglicht die in situ Bildung der gassensitiven Phase, und zwar unmittelbar im Bereich der später
bei der Messung dem Gaszutritt ausgesetzten Dreiphasenkontaktpunkte vom Typ:
Material der porösen Meßelektrode/gassensitive Phase/Gas.

Bei der Bildung der gassensitiven Phase kann es ferner zweckmäßig sein, im Bereich der Meßelektrode mindestens einen, die Bildung dieser gassensitiven Phase begünstigenden, vorzugsweise metallischen Zusatzstoff anzuordnen.

Wenn beispielsweise die Meßelektrode bei der $Cl_2$ Partialdruckmessung aus Platin besteht, läßt sich auf diese eine dünne, vorzugsweise mikroporöse Indium-Schicht aufbringen. Die Platin-Elektrode, die mit der Indiumschichtstruktur in elektrisch-leitender Verbindung steht, stellt dann mit ihrer Ableitung die Meßelektrode dar. Bei einem Festelektrolyten, welcher aus Ag-ß-Alumina besteht und mit einer Referenzphase aus Silber verwendet wird, ergeben sich aus den vorhandenen Reaktionspartnern Indium und Silber in Verbindung mit dem nachzuweisenden Gas $Cl_2$ als Anteile der gassensitiven Schicht chemische Verbindungen, nämlich $Ag_3InCl_6$ und AgCl bzw. $InCl_3$. Die gassensitive Phase stellt somit eine Mischung aus diesen chemischen Verbindungen dar. Alternativ kann anstelle von Indium auch vorteilhaft Gallium verwendet werden. In diesem Falle besteht die gassensitive Schicht aus einer Mischung von $AgGaCl_4$ und AgCl bzw. $GaCl_3$. Ob als Reaktionsprodukt bei der Gaseinwirkung AgCl oder die entsprechende Verbindung des Zusatzmetalles $InCl_3$ bzw.

GaCl$_3$ gebildet wird, hängt von der Art der Stromeinprägung und dabei von der Menge der zur Bildung angebotenen Silberionen ab.

Die Dicke der zu erzeugenden gassensitiven Phase, d.h.
im Falle der porösen Platin-Meßelektrode die Dicke der
die Pt-Inseln umgebenden Randzone, wird zweckmäßig durch
das Produkt aus Stromstärke und Zeit bestimmt. Dies bedeutet, daß der durch die angelegte Vorspannung hervorgerufene Strom eine solche Größe aufweist, daß nach einer vorgegebenen Zeit eine für die verbesserte Ankopplung der durch den Partialdruck der nachzuweisenden Komponente im Falle der Messung bewirkten Aktivitäts- änderung der mit dem festen Ionenleiter austauschenden Komponente optimierte gassensitive Phase definiert gebildet werden kann.

Während der Erzeugung der gassensitiven Phase können variable Werte für Strom und Zeit benutzt werden, so daß insgesamt das Integral über aufgeprägte Stromstärke und Zeitdauer zur Festlegung der Dicke der gassensitiven Phase benutzt wird.

Es kann ferner zweckmäßig sein, die in situ Bildung der gassensitiven Phase bei einer Temperatur durchzuführen, die höher ist als die Temperatur, bei welcher die Festelektrolytzelle zur potentiometrischen Partialdruckbestimmung eingesetzt wird. Die mit höherer Temperatur einhergehende Verringerung der Zellimpedanz erleichtert die Stromeinprägung in der Festkörperkette, ohne daß die Zersetzungsspannung erreicht wird.

Ein weiterer Vorteil kann gegebenenfalls dadurch erlangt werden, daß bei einer Festkörperkette, deren Ionenleiter auf der der Ausbildung der gassensitiven Phase dienenden Oberfläche mit einer porösen elektronisch leitenden gegenüber einer Reaktion mit der nachzuweisenden Gaskomponente inerten Schichtstruktur versehen ist, die gassensitive Phase in den Poren dieser Schichtstruktur erzeugt wird. Dies ergibt eine besonders günstige Ausbildung von Dreiphasenkontaktpunkten. Durch diese kontrollierte in situ Bildung besitzt die entstandene gassensitive Phase aufgrund ihrer nicht zusammenhängenden Inselstruktur eine schnelle Ansprechcharakteristik, so daß diese gassensitive Sekundärelektrodenkonfiguration spezifische Vorteile gegenüber anderen Elektrodenstrukturen aufweist, die beispielsweise durch Aufdampfen oder Sputtern erzeugt werden.

Bei einer Festkörperkette, deren Ionenleiter meßseitig vom direkten Zutritt der Gasphase durch eine für dieselbe Ionensorte permeable, also die in der eigentlichen gassensitiven Phase beim Meßvorgang hervorgerufene Aktivitätsveränderung der beweglichen Komponente an den Ionenleiter ankoppelnde Zwischenschicht getrennt ist, kann vorteilhaft die Meßelektrode zur Heranführung der beweglichen Ionen zwecks Bildung der gassensitiven Phase auf dieser Zwischenschicht angeordnet sein. Im Gegensatz zu der in situ Bildung der gassensitiven Phase unmittelbar auf der Oberfläche des Ionenleiters ergibt sich in diesem Falle durch die Zwischenschicht ein Ausschluß unerwünschter chemischer Reaktionen, wie etwa der Zersetzung des Ionenleiters bei nicht vorhandener thermodynamischer Stabilität unter den meßseitig herrschenden Aktivitätsverhältnissen der beweglichen Ionensorte, welche durch den Partialdruck der nachzuweisenden Gaskomponente festgelegt sind.

Ein vorteilhaftes Verfahren zur Regenerierung einer insbesondere in situ erzeugten gassensitiven Phase kann darin bestehen, daß die während des Meßeinsatzes aufgrund von Umgebungseinflüssen gealterte, in ihren Eigenschaften nachteilig veränderte gassensitive Phase durch eine an die beiden Ableitelektroden angelegte Vorspannung in ihre Bestandteile zerlegt wird. Daran anschließend wird eine Vorspannung mit umgekehrtem Vorzeichen derart angelegt, daß unter gleichzeitiger Einwirkung des während der Messung nachzuweisenden Gases die gassensitive Phase erneut erzeugt wird.

Eine zweckmäßige Festkörperkette zur Durchfürhung des Verfahrens kann so aufgebaut sein, daß die zur Spannungszuführung benutzte Meßelektrode auf der der zu bildenden gassensitiven Phase zugewandten Oberfläche des Ionenleiters eine metallene Netzstruktur aufweist. Die Meßelektrode besteht dabei zweckmäßig aus einem feinmaschigen Platinnetz mit einer Maschenweite unterhalb von 50 $\mu$m.

Bei dem im vorangegangenen beschriebenen Verfahren kann vor Beginn der Messung auf der Oberfläche des Ionenleiters und im Bereich der mit der Oberfläche desselben in Kontakt stehenden Punkte der Meßelektrode durch chemische Reaktion mit der nachzuweisenden Meßkomponente oder aus einer die nachzuweisende Meßkomponente enthaltenden chemischen Verbindung die gassensitive Phase unter Stromfluß elektrochemisch gebildet werden. Nachdem eine mittlere effektive Dicke der mikro-porösen gassensitiven Phase erreicht worden ist, kann die Messung eingeleitet werden. Dabei wird die zur Erzeugung der gassensitiven Phase zunächst zwischen den Ableitelektroden angelegte Spannung abgeschaltet und die Spannungsquelle durch ein hochohmiges Voltmeter als Anzeigesystem ersetzt. Nach betriebsmäßiger Alterung der gassensitiven Phase erfolgt gegebenenfalls deren Zerlegung und die erneute in situ Bildung.

Eine zweckmäßige Weiterbildung kann eine Betriebsart vorsehen, bei der auf einem Substrat mindestens zwei oder mehrere Festkörperketten gegebenenfalls mit gemeinsamer Referenzelektrode und getrennten Meßelektroden vorgesehen sind.

Dadurch ergibt sich die Möglichkeit, unter bestimmten Voraussetzungen zwischen Messen und Regenerieren abzuwechseln. Dies kann entweder dadurch erfolgen, daß mit der einen gassensitiven Phase gemessen wird, während im Bereich der anderen gassensitiven Phase gleichzeitig eine Regenerierung durchgeführt wird oder dadurch, daß Messen und Regenerieren jeweils abwechselnd

- 11 -

0232513

erfolgen. Das gleichzeitige Messen und Regenerieren mit den beiden Festkörperketten ist im Falle einer einzigen gemeinsamen Referenzelektrode nur dann möglich, wenn durch das Anlegen der Vorspannung zwischen dieser Referenzelektrode und der zu regenerierenden Meßelektrode keine Polarisationserscheinungen und damit verbundene Änderungen der Galvanipotentialdifferenz an der Phasengrenze Referenzelektrode/Festelektrolyt auftreten, welche die Potentialdifferenzmessung an der anderen Kette störend beeinflussen würden. Tritt jedoch beim Anlegen der Vorspannung zur Regenerierung bei gemeinsamer Referenzelektrode eine Verschiebung der Potentialverhältnisse an der genannten Referenzelektrode ein, so daß eine Potentialmessung gegenüber dieser nicht mehr unter den Verhältnissen der Gleichgewichtsbedingung (Stromlosigkeit) durchgeführt werden kann, so muß das Messen und Regenerieren abwechselnd erfolgen, wenn man auf eine Aufteilung der Referenzelektrode in getrennte Bereiche auf der einen Seite des Festelektrolyten zusammen mit separaten Ableitelektroden verzichten will, die eine Quasiunabhängigkeit der gleichzeitig zum Messen und Regenerieren eingesetzten Ketten erzielen können.

Die in getrennte Bereiche unterteilte Meßelektrode kann gegebenenfalls zweckmäßig auch aus jeweils verschiedenen gassensitiven Phasen bestehen, welche die gleichzeitige Messung verschiedener Komponenten des zu untersuchenden Mediums ermöglichen. Die Regenerierung einer gealterten gassensitiven Phase kann dann, wie bereits beschrieben, dadurch erfolgen, daß

zwischen jeweils eine Meßelektrode mit der zugehörigen gassensitiven Phase und der gemeinsamen nicht polarisierbaren Referenzelektrode zunächst eine den Abbau dieser Phase bewirkende Vorspannung angelegt wird. Anschließend erfolgt unter gleichzeitiger Einwirkung der nachzuweisenden Komponente die Bildung der sensitiven Phase durch Aufprägen einer Spannung mit gegenüber dem Abbauvorgang umgekehrter Polarität.

Ein derartiger Festelektrolytsensor kann zum Schutz vor mechanischen und chemischen Einwirkungen mit Hilfe eines Dickfilms aus inertem Material, z.B. einer keramischen Substanz, so verkapselt werden, daß von der Sensoroberfläche nur der sensitive Bezirk einer oder mehrerer Meßelektroden gegenüber dem nachzuweisenden Medium zugänglich bleibt.

Durch die Merkmale der Erfindung wird ein besonders schnell ansprechender Festelektrolytsensor für eine oder mehrere Komponenten vorzugsweise eines Gasmediums geschaffen, bei dem die sensitive Phase im Bereich der Meßelektrode in situ erzeugt und gegebenenfalls regeneriert wird.

In der Zeichnung sind Ausführungsbeispiele des Gegenstandes der Erfindung schematisch dargestellt; es zeigen:

Fig. 1    eine schematische Ansicht einer Festkörperkette, in der eine gassensitive
          Phase durch Stromeinprägung erzeugt wird,
Fig. 2    eine alternative Ausbildung einer Festkörperkette mit zwei Meßelektroden.

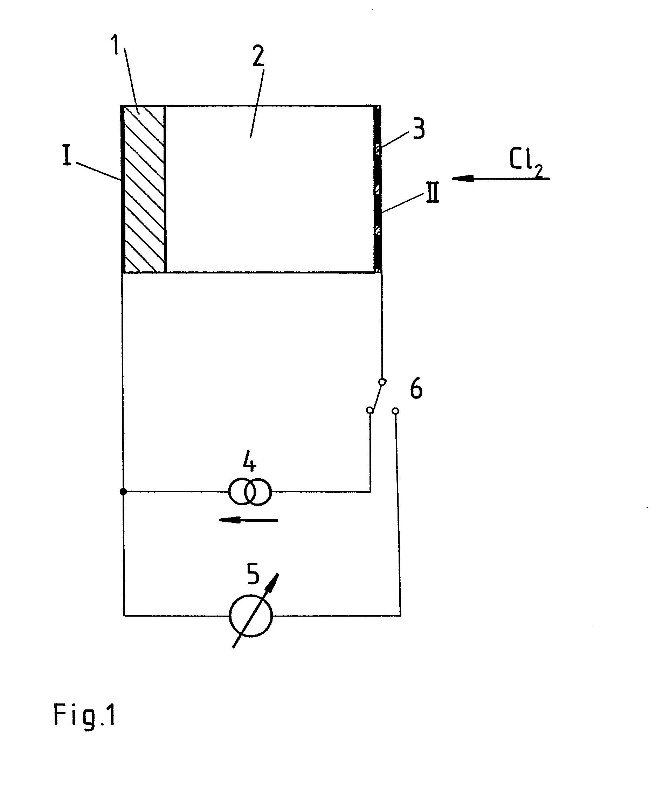

In Fig. 1 ist eine Festkörperkette dargestellt, welche aus einer Referenzelektrode I besteht, die auf einer Referenzphase 1 aus Silber aufliegt. In der praktischen Ausführung bilden die Referenzelektrode I und die Referenzphase 1 eine Einheit, die nur zur besseren Unterscheidung in der zeichnerischen Darstellung als getrennte Phasen angegeben sind. An die Referenzphase 1 aus Silber schließt sich ein Festelektrolyt 2 an, welcher aus Ag-ß-Alumina besteht.

In Verbindung mit dem Festelektrolyten 2 ist eine gassensitive Phase 3 aus AgCl vorgesehen, die im Bereich einer gitterförmigen Meßelektrode II aus Platin durch Stromdurchgang zwischen der Referenzelektrode I und der Meßelektrode II erzeugt wird und die sich auf der Oberfläche des Festelektrolyten 2 und in den Zwischenräumen zwischen der Gitterstruktur der Meßelektrode II unter gleichzeitiger Einwirkung der nachzuweisenden Chlorgaskomponente ausbildet.

Zum Anlegen einer Vorspannung zwischen der Referenzelektrode I und der Meßelektrode II ist eine Stromquelle 4 vorgesehen, die anstelle eines Meßgerätes 5 wahlweise durch einen Umschalter 6 an die Ableitelektroden I,II angelegt werden kann.

Zunächst wird die Meßelektrode II dem nachzuweisenden Chlorgas ausgesetzt, und gleichzeitig wird in entsprechender Stellung des Umschalters 6 über die Stromquelle 4 der Festkörperkette ein Strom von ca. 1 $\mu$A eingeprägt. Dieser führt bewegliche Ag-Ionen an die Grenzfläche des festen Ionenleiters 2 gegenüber der Meßelektrode II heran, wo sie mit den Chlormolekülen aus der Umgebungsatmosphäre reagieren und in situ die sensitive Phase, nämlich AgCl bilden. Nachdem die Ausbildung der gassensitiven AgCl-Schicht abgeschlossen ist, kann die Festkörperkette als Sensor zur potentiometrischen Messung von $Cl_2$-Partialdrücken eingesetzt werden. Hierzu ist der Umschalter 6 in die Meßstellung zu bringen, in der zwischen den Ableitelektroden I,II ein hochohmiges mV-Meter 5 eingeschaltet ist.

Beim Gebrauch des Festelektrolytsensors kann durch Alterungsvorgänge eine Verminderung der Empfindlichkeit der gassensitiven Phase (AgCl) eintreten, welche eine Regenerierung dieser Phase erforderlich macht. Durch Umlegen des Umschalters 6 in die bereits beschriebene Stellung mit eingeprägtem Strom kann der Festelektrolytsensor erneut wieder vollständig sensibilisiert werden. Dies erfolgt in zwei Schritten. Im ersten Schritt wird bei entgegengesetzter Stromrichtung (verglichen mit der Stromrichtung zur Bildung der gassensitiven Phase) die ursprünglich vorhandene gassensitive Phase durch Zersetzung abgebaut. Im zweiten Schritt erfolgt unter Stromumkehr die Bildung einer frischen gassensitiven Phase. Bei der hierzu erforderlichen $Cl_2$-haltigen Atmosphäre entsteht im zweiten Schritt eine durch die Porosität der Meßelektrode festgelegte dünne AgCl-Struktur, vornehmlich an den dafür zur Verfügung stehenden Dreiphasenkontaktpunkten, und zwar vom Typ Ag-ß-Alumina/Pt/Gas($Cl_2$).

Anstelle der beschriebenen Anordnung läßt sich zur $Cl_2$-Partialdruckbestimmung auch folgende Festkörperkette verwenden, bei der zwischen dem Festelektrolyten und der sensitiven Phase eine Sperrschicht aus AgI eingefügt ist.

Referenzelektrode I/Ag/$Ag_4RbI_5$/AgI/AgCl/
Meßelektrode II/nachzuweisendes Medium $P_{Cl_2}$

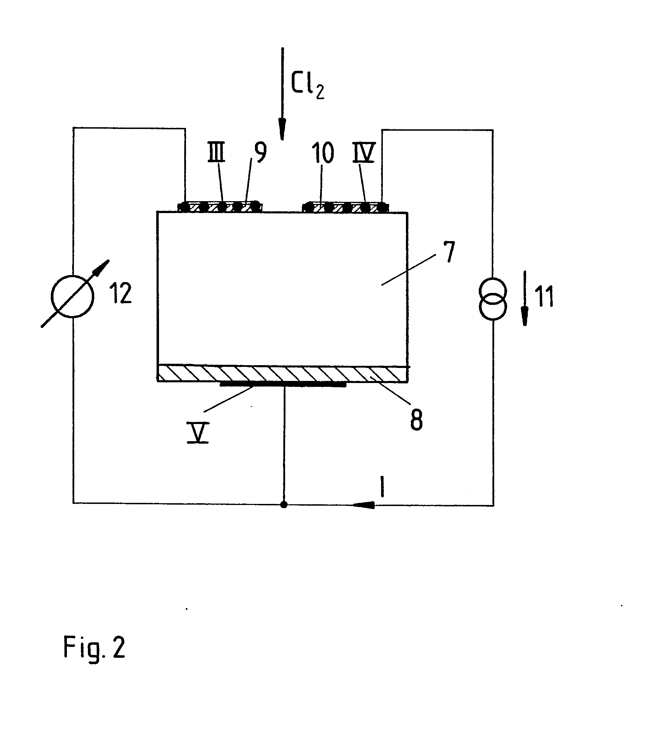

In Fig. 2 ist ein Festelektrolytsensor 7 erkennbar, welcher eine Referenzphase 8 aufweist, auf der eine gemeinsame metallene Referenzelektrode V aufliegt.

Auf der Oberfläche des Festelektrolytsensors 7 sind zwei gassensitive Phasen 9,10 in situ ausgebildet, die mit Meßelektroden III,IV in Verbindung stehen.

Mit Hilfe einer Stromquelle 11 wird ein Strom zwischen der Meßelektrode IV und der Referenzelektrode V eingeprägt. Die andere Meßelektrode III kann gleichzeitig zur hochohmigen, potentiometrischen Messung des Chlorpartialdrucks benutzt werden. Hierzu ist das Anzeigegerät 12 vorgesehen.

Patentansprüche

1. Verfahren zur Erzeugung einer sensitiven Phase in einer zur Messung einer Komponente eines Mediums, insbesondere eines Gasgemisches, bestimmten, einen festen Ionenleiter enthaltenden Festkörperkette, wobei in Verbindung mit der an den Ionenleiter anschließenden Referenzphase und der entsprechend der nachzuweisenden Gaskomponente ausgewählten gassensitiven Phase Ableitelektroden, nämlich eine Referenzelektrode und eine poröse Meßelektrode, vorgesehen sind, d a d u r c h   g e k e n n - z e i c h n e t , daß an den Bezugsflächen des festen Ionenleiters zwischen der auszubildenden Meßelektrode und der Referenzelektrode eine Gleichspannung geeigneter Polarität angelegt wird, welche einen Strom erzeugt, der solche bewegliche Ionen aus dem Ionenleiter an dessen Oberfläche und an die poröse Meßelektrode im Bereich der zu bildenden gassensitiven Phase heranführt, die mit der gleichzeitig gasförmig vorliegenden, während der Messung nachzuweisenden Gaskomponente auf der Meßelektrode die gassensitive Phase bilden.

2. Verfahren nach Anspruch 1, d a d u r c h   g e -
k e n n z e i c h n e t , daß die Meßelektrode mit
mindestens einem die Bildung der gassensitiven
Phase begünstigenden Zusatzstoff versehen ist.

3. Verfahren nach Anspruch 2, d a d u r c h   g e -
k e n n z e i c h n e t , daß ein metallischer
Zusatzstoff verwendet wird.

4. Verfahren nach Anspruch 1, d a d u r c h   g e -
k e n n z e i c h n e t , daß die Dicke der zu erzeugenden gassensitiven Phase durch das Produkt aus
Stromstärke und Zeit bestimmt wird.

5. Verfahren nach Anspruch 1, d a d u r c h   g e -
k e n n z e i c h n e t , daß die Bildung der gassensitiven Phase bei einer Temperatur durchgeführt
wird, die höher liegt als die bei der Messung vorgesehene Betriebstemperatur dieser gassensitiven Phase.

6. Verfahren nach Anspruch 1, d a d u r c h   g e -
k e n n z e i c h n e t , daß bei einer Festkörperkette, deren Ionenleiter auf der der Ausbildung der
gassensitiven Phase dienenden Oberfläche mit einer porörsen elektronisch leitenden, gegenüber einer Reaktion mit der nachzuweisenden Gaskomponente inerten Schichtstruktur versehen ist, die gassensitive Phase in den Poren der Schichtstruktur erzeugt wird.

7. Verfahren nach Anspruch 1, d a d u r c h   g e -
k e n n z e i c h n e t , daß bei einer Festkörperkette, deren Ionenleiter von der gassensitiven Phase durch eine Zwischenschicht getrennt ist, die Meßelektrode zur Heranführung der Ionen auf dieser Zwischenschicht angeordnet ist.

8. Verfahren zur Regenerierung einer, insbesondere nach Anspruch 1, erzeugten gassensitven Phase, d a -
d u r c h   g e k e n n z e i c h n e t , daß vor einer erneuten Erzeugung einer gassensitiven Phase an die beiden Ableitelektroden eine Vorspannung derart angelegt wird, daß sich die unter der Einwirkung des nachzuweisenden Gases gebildete gassensitive Phase wieder in ihre Bestandteile zerlegt, und daß anschließend die gassensitive Phase neu aufgebaut wird.

9. Festkörperkette zur Erzeugung einer sensitiven Phase nach Anspruch 1, d a d u r c h   g e k e n n -
z e i c h n e t , daß die zur Spannungszuführung benutzte Meßelektrode an der der zu bildenden gassensitiven Phase zugewandten Oberfläche des Ionenleiters als eine Netzstruktur ausgebildet ist.

10. Festkörperkette nach Anspruch 9, d a d u r c h g e k e n n z e i c h n e t , daß die Meßelektrode aus einer metallenen Netzstruktur besteht.

11. Festkörperkette, insbesondere nach einem der voran- gehenden Ansprüche, d a d u r c h   g e k e n n - z e i c h n e t , daß die sensitive Phase in mindestens zwei voneinander getrennte Phasenbereiche aufgeteilt ist, wobei jedem Bereich eine Referenzelektrode zugeordnet ist.

12. Festkörperkette nach Anspruch 11, d a d u r c h g e k e n n z e i c h n e t , daß den Phasenbereichen eine gemeinsame Referenzelektrode zugeordnet ist.

Fig.1

Fig. 2